# DEMANDE DE BREVET EUROPEEN

(11) **EP 0 704 363 A1**
(43) Date de publication de la demande: **03.04.1996**
(21) Numéro de dépôt: 95401895.8
(22) Date de dépôt: 16.08.1995
(51) Int. Cl.: B61D 27/00, B60H 1/00, F24F 13/10

(54) **Organe d'obturation à clapet d'un circuit d'air pour véhicules de chemin de fer**

(30) Priorité: 17.08.1994 FR 9410082
(71) Demandeur: FAIVELEY TRANSPORT, F-93200 Saint-Denis (FR)
(72) Inventeur: La désignation de l'inventeur n'a pas encore été déposée
(74) Mandataire: Derambure, Christian

(57) **Abrégé**

L'organe d'obturation d'un circuit d'air pour l'aspiration d'air neuf et/ou l'extraction d'air notamment pour la climatisation de l'intérieur des voitures de chemin de fer, le circuit qui relie l'intérieur et l'extérieur de la voiture comprenant une ouverture d'entrée d'air et une ouverture de sortie d'air

Le circuit comprenant un caisson (1) pourvu d'une ouverture d'entrée (2) et d'une ouverture de sortie (3), reliées respectivement à l'ouverture d'entrée et à l'ouverture de sortie du circuit, l'ouverture d'entrée et/ou de sortie d'air du caisson (1) étant associées à au moins un clapet (4) relié à un ou plusieurs organes d'actionnement (5) capables de déplacer le clapet correpondant vers l'ouverture d'entrée et/ou de sortie du caisson, afin d'en obtenir la fermeture d'une manière étanche.

## Description

L'invention concerne un organe d'obturation d'un circuit d'air pour l'aspiration d'air neuf et/ou l'extraction d'air.

Ce type de circuit est employé dans les véhicules terrestres notamment pour tous les traitements d'air tels que ventilation, chauffage et refroidissement d'éléments techniques. Une utilisation fréquente de ces circuits est la climatisation de l'intérieur des voitures de chemin de fer.

Ce type de circuit comprenant une ouverture d'entrée d'air et une ouverture de sortie d'air, relie l'intérieur et l'extérieur de la voiture.

Pour une climatisation, ce circuit distribue l'air dans des conduites qui débouchent à l'intérieur des voitures, notamment à l'emplacement des vitres latérales.

Lorsque les trains de chemin de fer, notamment les trains à grande vitesse, passent dans un tunnel ou se croisent, une forte surpression d'air est créée et celle-ci est transmise brutalement à l'intérieur des voitures par les circuits d'air dont elle est équipée.

La brutalité de cette surpression gène les passagers du fait du bruit qu'elle engendre et surtout des effets néfastes ressentis par eux au niveau de leurs tympans.

Un but de la présente invention est de remédier aux inconvénients ci-dessus.

L'invention a pour objet un organe d'obturation de circuit d'air pour l'aspiration d'air neuf et/ou l'extraction d'air notamment pour la climatisation de l'intérieur des voitures de chemin de fer, ce circuit comprenant une ouverture d'entrée et une ouverture de sortie qui relient l'intérieur à l'extérieur de la voiture.

Suivant l'invention, cet organe d'obturation comprend un caisson comportant une ouverture d'entrée et une ouverture de sortie d'air, respectivement reliées à l'ouverture d'entrée et à l'ouverture de sortie du circuit, l'ouverture et/ou la sortie d'air du caisson étant associés à un clapet relié à un ou plusieurs organes d'actionnement capables de déplacer le clapet correspondant vers l'ouverture d'entrée et/ou de sortie du caisson, afin d'en obtenir la fermeture d'une manière étanche.

Ainsi, les effets néfastes d'une surpression d'air créée lors du passage dans un tunnel ou lors du croisement de deux trains peut être évitée en commandant la fermeture du ou des clapets, c'est-à-dire l'obturation de l'ouverture d'entrée et/ou de sortie du caisson. Lorsque la surpression cesse, le caisson comprend un clapet de forme sensiblement conique et coopérant avec une surface tronconique complémentaire du caisson ménagée autour de son ouverture d'entrée et/ou de sortie.

Grâce à cette forme conique du clapet, celui-ci n'entraîne pas de perte de charge significative pour l'air entrant dans le circuit de climatisation.

Avantageusement, la surface du clapet et la surface complémentaire du caisson comportent des joints souples d'étanchéité susceptibles de s'appliquer l'un sur l'autre en position de fermeture du clapet.

Ces joints souples garantissent à la fois l'étanchéité en position de fermeture, qui est essentielle pour éviter complètement l'effet néfaste de la surpression, et évitent par amortissement le choc mécanique de la fermeture du clapet dont le bruit pourrait se transmettre à l'intérieur de la voiture.

De préférence, l'organe d'actionnement du clapet est un vérin pneumatique logé à l'intérieur du caisson, sa tige s'étendant suivant l'axe de ce caisson.

Ce vérin pneumatique fonctionne d'une manière très rapide, avec une première course très rapide et une fin de course plus lente et amortie pour réduire le choc résultant de la fermeture du clapet.

Le vérin pneumatique est relié à une électro-vanne de commande, elle-même raccordée à un détecteur de déclenchement de l'ouverture de la vanne, cette ouverture actionnant le vérin.

Le détecteur peut être placé à l'extérieur du circuit et notamment à la tête du train ou à un autre emplacement de ce dernier ou de la voie.

De préférence, le détecteur est raccordé à au moins deux clapets équipant une ou plusieurs voitures du train.

Ce détecteur peut être un capteur sensible à la surpression d'air et/ou un capteur sensible à la présence de gaz nocifs ou polluants.

D'autres particularités et avantages de l'invention apparaîtront encore dans la description ci-après.

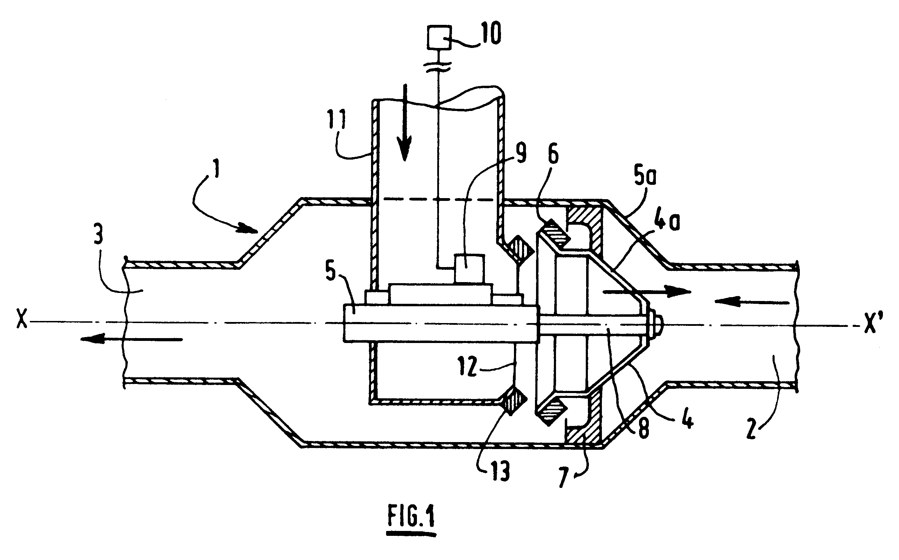

Sur la figure 1 unique annexée on a représenté schématiquement en coupe longitudinale, un organe d'obturation d'un circuit d'air de climatisation d'une voiture de chemin de fer.

Toutes les voitures de chemin de fer comprennent un circuit d'air pour l'aspiration d'air neuf et/ou l'extraction d'air, notamment pour la climatisation de l'intérieur de ces voitures de chemin de fer. Ce type de circuit, non représenté sur la figure, comprend une ouverture d'entrée et une ouverture de sortie d'air, qui relie l'intérieur et l'extérieur de la voiture.

L'air aspiré à l'extérieur pénètre par des conduites à l'intérieur de la voiture où elles débouchent par des fentes disposées généralement sous les fenêtres.

Conformément à l'invention, ce circuit d'air comprend organe d'obturation. Cet organe d'obturation comporte un caisson 1, de préférence sensiblement cylindrique et s'étendant de suivant une direction longitudinale définie par un axe central X-X'. Le caisson présente une ouverture d'entrée 2 reliée à l'ouverture d'entrée d'air du circuit, ainsi qu'une ouverture de sortie 3 reliée à un conduit amenant l'air à l'intérieur de la voiture.

Dans le cas de circuits de refroidissement, le conduit raccordé à l'ouverture de sortie 3 s'étend jusqu'à proximité d'un élément ou ensemble technique dont on souhaite maintenir la température à une valeur inférieure à un niveau maximal donné. Par exemple, on peut refroidir des éléments électriques tels que chargeur, convertisseur ou ensemble d'électronique de puissance.

L'ouverture d'entrée d'air 2 du caisson 1 est associée à un clapet 4 relié à un organe d'actionnement 5 capable de déplacer le clapet vers l'ouverture d'entrée d'air 2 et de fermer celle-ci.

Un même clapet ou encore un second clapet de constitution analogue peut être prévu pour l'obturation de l'ouverture de sortie d'air 3 du caisson 1. Le clapet 4 présente une partie de forme sensiblement conique 4a. Le montage du clapet sur l'organe 5 s'effectue avec la partie de plus petite section transversale de la surface 4a en regard de l'ouverture à obturer.

La partie conique du clapet 4 coopère avec une surface 5a du caisson 1 de forme tronconique complémentaire.

La surface 5a est ménagée autour de l'ouverture de l'entrée 2 du caisson 1, ou dans le cas d'un clapet de sortie autour de l'ouverture 3.

Le clapet 4 et le caisson 1 sont équipés de joints d'étanchéité 6 et 7, susceptibles de s'appliquer l'un sur l'autre en position de fermeture du clapet 4.

Le joint 6 est monté à la périphérie externe de plus grande section du clapet 4.

Le joint 7 s'étend suivant la périphérie interne du caisson 1. Ce joint 7 peut être composé à partir d'un élastomère dont la dureté est inférieure à celle du joint 6, et par exemple réalisé à partir de néoprène.

Le joint 7 comprend une lèvre en saillie suivant un plan perpendiculaire à X-X'. Cette lèvre, qui pourrait également être agencée sur un joint du clapet 4, est disposée pour que ce dernier entre en contact étanche avec elle avant que la position maximale de fermeture du clapet 4 ne soit atteinte.

Suite à cette obturation hermétique, le clapet 4 est encore déplacé (suivant X-X' et de gauche à droite sur la figure). Ce déplacement supplémentaire entraîne l'entrée en contact des joints 6 et 7 et leur déformation élastique par écrasement. Cet écrasement a pour fonction d'amortir l'arrivée en position extrême de fermeture du clapet, et d'encore réduire la brutalité de l'obturation de l'ouverture correspondante.

Dans l'exemple représenté, l'organe d'actionnement 5 du clapet est un vérin pneumatique logé à l'intérieur du caisson 1. La tige 8 du vérin 5 s'étend suivant l'axe X-X'.

Le vérin pneumatique 5 est raccordé à une électro-vanne 9 de commande. Cette électro-vanne 9 est pour sa part raccordée à un détecteur 10.

Lorsqu'un signal de déclenchement est fourni par le détecteur 10 à la vanne 9, l'ouverture de cette dernière est provoquée et le vérin 5 est actionné. L'alimentation de puissance en fluide sous pression du vérin 5 n'est pas illustrée ici.

Le détecteur 10 est situé à l'extérieur du caisson 1, voire du circuit d'air. Un emplacement possible pour un tel détecteur peut être la tête ou tout autre emplacement du train, ou encore au niveau d'un équipement au sol, par exemple à proximité de la voie.

Un détecteur 10 peut être raccordé à un ou plusieurs organes de fermeture de clapets. Un train composé de plusieurs voitures peut ne comporter qu'un seul détecteur. Alors, la fermeture des divers clapets 4 de toutes les voitures du train est déclenchée par un détecteur unique.

Le détecteur 10 peut être un capteur sensible à la surpression d'air engendrée lors du passage dans un tunnel ou d'un croisement de train.

Le détecteur 10 peut également être un capteur sensible à la présence de gaz nocifs ou polluants.

Ici, le caisson 1 comporte une tubulure latérale 11, orientée perpendiculairement à X-X'. La section de cette tubulure 11 est ici cylindrique, mais peut être par exemple rectangulaire.

Cette tubulure débouche à l'intérieur du caisson 1 par une ouverture 12 centrée sur l'axe X-X', et en regard de l'ouverture d'entrée 2 du caisson.

Cette ouverture 12 est bordée par une surface tronconique 13 coopérant, de préférence par l'intermédiaire d'un joint d'étanchéité, avec la surface tronconique 4a du clapet 4. Ce dernier peut ainsi fermer de façon étanche l'ouverture 12 de la tubulure 11.

Ainsi, un même clapet 4 obture ou dégage deux ouvertures 2 et 12, à la façon d'une vanne trois voies.

Dans une position extrême (vers la droite sur la figure), le clapet 4 obture l'ouverture d'entrée 2 et dégage l'ouverture 12, reliant l'ouverture 3 à la tubulure 11.

Dans l'autre position extrême (vers la gauche sur la figure), c'est l'ouverture 12 qui est obturée, et l'ouverture 2 qui est dégagée.

Cet agencement permet d'intégrer le caisson 1 à une ligne d'extraction, l'air déplacé étant utilisé pour le refroidissement d'un élément technique à bord du véhicule. Dans ce cas, la tubulure 11 prend l'air sous le chassis de la voiture afin de continuer le refroidissement de cet élément, pendant que le clapet 4 obture le circuit d'air intérieur à la voiture.

Le fonctionnement du dispositif que l'on vient de décrire est le suivant :

Dès que le détecteur 10 perçoit une surpression d'air (ou la présence d'un gaz nocif), l'électro-vanne 9 est ouverte en permettant ainsi à l'air comprimé d'actionner le vérin 5.

Le clapet 4 est ainsi appliqué de façon étanche contre l'ouverture d'entrée 2. Grâce à la rapidité du fonctionnement du vérin, le temps écoulé entre la détection et la fermeture complète du clapet 4 n'est que de l'ordre de 50 ms.

Ainsi, les passagers du train ne ressentent aucun bruit, ni aucune gène due à la surpression.

Bien entendu, dès que cette dernière disparaît, le détecteur 10 commande le retrait du vérin 5 et l'ouverture du clapet 4. L'air circule alors à nouveau dans le circuit de climatisation et le clapet 4, grâce à sa forme aérodynamique, n'entraîne aucune perte de charge au sein du circuit.

Le vérin de commande du clapet peut comporter un contacteur de positionnement de ce clapet. En outre, le temps de fermeture du clapet peut être réglable.

L'organe d'actionnement du clapet peut être monté sur des amortisseurs tandis que l'ensemble du caisson peut être équipé d'un système anti-vibrations.

## Revendications

1. Organe d'obturation d'un circuit d'air pour l'aspiration d'air neuf et/ou l'extraction d'air notamment pour la climatisation de l'intérieur des voitures de chemin de fer, le circuit qui relie l'intérieur et l'extérieur de la voiture comprend une ouverture d'entrée d'air et une ouverture de sortie d'air, le circuit comprenant un caisson (1) pourvu d'une ouverture d'entrée (2) et d'une ouverture de sortie (3), reliées respectivement à l'ouverture d'entrée et à l'ouverture de sortie du circuit, l'ouverture d'entrée et/ou de sortie d'air du caisson (1) étant associées à au moins un clapet (4) relié à un ou plusieurs organes d'actionnement (5) capables de déplacer le clapet, afin d'en obtenir la fermeture d'une manière étanche, caractérisé en ce que, le clapet (4) étant déplaçable lors de sa fermeture vers l'ouverture d'entrée et/ou de sortie du caisson, l'organe d'actionnement (5) est agencé pour fonctionner avec une première course rapide, par exemple de l'ordre de 50 ms, et une deuxième course amortie, tandis qu'entre le caisson (1) et le clapet (4) est prévu au moins un joint (7) en saillie apte à subir une déformation élastique par écrasement lors de la deuxième course de l'organe d'actionnement (5), suite à l'obturation hermétique, afin d'amortir l'arrivée en position extrême de fermeture.

2. Organe selon la revendication 1, caractérisé en ce que la forme sensiblement cylindrique du caisson (1) et celle du clapet (4) n'entraînent pas de perte de charge significative au sein du circuit.

3. Organe selon la revendication 1, caractérisé en ce que le caisson (1) comprend un clapet (4) de forme sensiblement conique (4a) et coopèrant avec une surface (5a) tronconique complémentaire du caisson (1), ménagée autour de son ouverture d'entrée et/ou de sortie.

4. Organe selon la revendication 3, caractérisé en ce que la surface (4a) du clapet et la surface complémentaire (5a) du caisson comportent des joints souples (6, 7) d'étanchéité susceptibles de s'appliquer l'un sur l'autre en position de fermeture du clapet (4).

5. Organe selon l'une des revendications 1 à 4, caractérisé en ce que l'organe d'actionnement (5) du clapet est un vérin pneumatique logé à l'intérieur du caisson (1), sa tige (8) s'étendant suivant un axe longitudinal (X-X') de ce caisson.

6. Organe selon la revendication 5, caractérisé en ce que le vérin pneumatique (5) est relié à une électrovanne de commande (9), elle-même raccordée à un détecteur de déclenchement (10) de l'ouverture de la vanne (9), cette ouverture actionnant le vérin (5).

7. Organe selon la revendication 6, caractérisé en ce que le détecteur (10) est placé à l'extérieur du caisson (1) et/ou du circuit d'air correpondant, et notamment à la tête du train, à un autre emplacement de ce dernier ou de sa voie de circulation.

8. Organe selon la revendication 6 ou 7, caractérisé en ce que le détecteur (10) est raccordé à au moins deux clapets (4) équipant une ou plusieurs voitures du train.

9. Organe selon l'une des revendications 6 à 8, caractérisé en ce que ledit détecteur (10) est un capteur sensible à la présence de gaz nocifs ou polluants.

10. Organe selon l'une des revendications 6 à 9, caractérisé en ce que ledit détecteur (10) est un capteur sensible à la surpression d'air.

11. Organe selon l'une des revendications 3 à 10, caractérisé en ce que le caisson (1) comporte une tubulure latérale (11) qui débouche à l'intérieur du caisson par une ouverture (12) centrée sur un axe (X-X') et en regard de l'ouverture d'entrée (2) du caisson, cette ouverture (12) étant bordée par une surface tronconique (13) coopérant avec la surface tronconique (4a) du clapet (4), de sorte que ce clapet (4) puisse fermer de façon étanche ladite ouverture (12) de la tubulure (11).
